# EUROPÄISCHE PATENTANMELDUNG

(11) **EP 1 050 752 A1**
(43) Veröffentlichungstag der Anmeldung: **08.11.2000**
(21) Anmeldenummer: 00104190.4
(22) Anmeldetag: 01.03.2000
(51) Int. Cl.: G01L 19/00, F16L 41/00, G01F 15/18

(54) **Drucktransmitterinstallation an einer Prozessleitung einer Prozessanlage**

(30) Priorität: 07.05.1999 DE 19921172
(71) Anmelder: Hess, Martin, 80339 München (DE)
(72) Erfinder: Hess, Martin, 80339 München (DE)
(74) Vertreter: Neubauer, Hans-Jürgen, Dipl.-Phys.

(57) **Zusammenfassung**

Die Erfindung betrifft eine Drucktransmitterinstallation (1; 24) an einer Prozessleitung einer Prozessanlage mit wenigstens einer mediumbeaufschlagten Messleitung (5; 26, 27; 61) sowie einer Flanschverbindung (7; 33) zwischen Anschlüssen an der Prozessleitung und der Messleitung sowie einer Flanschverbindung (9; 35) zwischen einem Anschlussblock (3; 32) und der Messleitung (5; 26, 27; 61), wobei die Flanschverbindungen jeweils messleitungsseitige Flansche (8, 11; 34, 37; 53; 62) aufweisen. Erfindungsgemäß ist wenigstens einer der messleitungsseitigen Flansche (8, 11; 34, 37; 53; 62) zweiteilig ausgeführt und besteht zum einen aus einem mit dem jeweiligen Messleitungsende verschraubten Flanschstutzen (14; 46, 50; 54) mit einer axialen Durchgangsbohrung (18; 47; 55) und einem Flanschteil (15; 48, 51; 56, 58; 64) mit stirnseitiger Dichtfläche (19) sowie zum anderen einem übergeworfenen, mit der jeweiligen Anlagefläche (10; 36; 59) verschraubten Losflansch (22; 49, 52; 57), der das Flanschteil (15; 48, 51; 56, 58; 64) übergreift und es mit der Anlagefläche (10; 36; 59) verbindet und mit seiner Dichtfläche (19) gegen diese Anlagefläche (10; 36; 59) presst. Damit ist eine große Flexibilität durch eine Wahl unterschiedlicher Flanschformen möglich, wobei gleichzeitig bei hoher mechanischer Festigkeit keine Toleranzprobleme, insbesondere im Hinblick auf die Fluchtung von Lochbildern auftreten.

## Beschreibung

Die Erfindung betrifft eine Drucktransmitterinstallation an einer Prozessleitung einer Prozessanlage nach dem Oberbegriff des Anspruchs 1.

In Prozessanlagen, wie in Chemie- und Raffinerieanlagen, werden zu Druckmessungen als Feldgeräte vor Ort installierte Drucktransmitter verwendet. Drucktransmitter werden beispielsweise zur Messung des Prozessmediumdrucks und zur Erfassung von Füllständen eingesetzt. Zu Durchflussmessungen werden in allgemein bekannter Weise Messblenden mit Differenzdrucktransmittern verwendet.

Eine bekannte, gattungsgemäße Drucktransmitterinstallation (WO 97/22855) umfaßt eine mediumbeaufschlagte Messleitung zwischen der Prozessleitung und einem Anschlussblock des Drucktransmitters. Die Messleitung ist an beiden Enden über Flanschverbindungen jeweils mit Anschlüssen an der Prozessleitung und an einem Anschlussblock des Drucktransmitters verbunden.

Konkret ist hier die Drucktransmitterinstallation als Differenzdruckmessanordnung mit zwei parallelen Messleitungen ausgebildet. Die Anschlüsse an der Prozessleitung bestehen aus angeschweißten Flanschstutzen. Ebenso sind an beiden Messleitungsenden Flanschstutzen angeschweißt, die einerseits mit den Anschlüssen an der Prozessleitung und andererseits mit einer Anlagefläche am Anschlussblock des Drucktransmitters über Dichtflächen verschraubt sind.

Bei einer allgemein bekannten, herkömmlichen Drucktransmitterinstallation ist der Drucktransmitter relativ weit von der Prozessleitung entfernt angeordnet und mit langen, biegbaren Messleitungen angeschlossen. Eine solche Drucktransmitterinstallation ist aufwendig, da der Drucktransmitter und der Ventilblock an einer geeigneten Stelle separat zu befestigen sind und dann die langen Messleitungen angeschlossen werden müssen. Zudem können lange Messleitungen ggf. zu Messunsicherheiten führen.

Bei der gattungsgemäßen Drucktransmitterinstallation (WO 97/22855) ist diese zur Reduzierung des Installationsaufwands direkt an der Prozessleitung durchgeführt und gehalten, wobei hier die kurzen und stabilen Messleitungen eine Trägerfunktion für den Anschlussblock (Ventilblock) und den Drucktransmitter übernehmen. Durch diese Tragfunktion werden die Schweißverbindungen der angeschweißten Flanschstutzen hoch belastet und die mechanische Festigkeit der Anordnung ist nachteilig im wesentlichen durch die Qualität dieser Schweißverbindungen bestimmt, so daß diese genau und aufwendig durchzuführen sind.

Zudem sind solche stabilen Messleitungen in der Art von Messleitungsblöcken nicht biegsam und nicht verdrehbar, so dass die Lochbildzuordnung der Flanschstutzen an beiden Messleitungsenden nach dem Anschweißen der Flanschstutzen genau stimmen muß. Bei geringfügig verdrehten Lochbildern kann ggf. ein Anschluss nicht mehr möglich sein, da Toleranzen nicht ausgeglichen werden können.

Je nach den Einsatzfällen und Einsatzorten werden unterschiedliche Flansche, beispielsweise Ovalflansche, Doppelovalflansche oder Kreisscheibenflansche mit unterschiedlichen Lochbildern verwendet. Nachdem die entsprechend gestalteten Flanschstutzen an den Messleitungsenden angeschweißt sind, liegt die Flanschgestalt fest und ein flexibler Einsatz in Verbindung mit anderen Flanschausführungen ist nicht mehr möglich.

Weiter ist eine zweiteilig ausgeführte Flanschverbindung mit einem losen Flansch zum Anschluss eines Manometers an eine Messbohrung bekannt (DE-PS 939 292). Zum Ausgleich von temperaturbedingten, radialen Ausgleichsbewegungen zwischen einem Flanschstutzen und dem übergeworfenen und verschraubten Losflansch sind in Radialrichtung jeweils umlaufende Ausgleichsspalte vorgesehen, wobei der Losflansch nur so stark angeschraubt ist und auf den Flansch des Flanschstutzens drückt, dass betriebsbedingte, radiale Relativverschiebungen möglich sind. Zudem ist über den Flanschstutzen in Axialrichtung ein weiteres Flanschrohr mit einer Gleitführung für einen axialen, temperaturbedingten Längenausgleich gesteckt. Durch die in Radial- und Axialrichtung wirkenden Gleitverbindungen ist diese Anordnung nicht geeignet, eine stabile Tragfunktion für angeschlossene Transmitter zu übernehmen.

Aufgabe der Erfindung ist es, eine gattungsgemäße Drucktransmitterinstallation so weiterzubilden, daß eine große Flexibilität durch eine Wahl unterschiedlicher Flanschformen möglich ist und zudem bei hoher mechanischer Festigkeit keine Probleme mit Toleranzen insbesondere hinsichtlich der Fluchtung von Lochbildern auftreten.

Diese Aufgabe wird mit den Merkmalen des Anspruchs 1 gelöst.

Gemäß Anspruch 1 ist wenigstens einer der messleitungsseitigen Flansche zweiteilig ausgeführt und besteht aus einem Flanschstutzen und einem Losflansch. Der Flanschstutzen ist fest mit dem jeweiligen Messleitungsende verschraubt und weist eine axiale Durchgangsbohrung und ein Flanschteil mit stirnseitiger Dichtfläche auf. Der Losflansch ist übergeworfen und übergreift das Flanschteil und presst dieses mit einer Dichtfläche gegen die Anlagefläche, wobei der Losflansch mit der jeweiligen Anlagefläche am Prozessleitungsanschluss oder am Drucktransmitteranschluss verschraubt ist.

Damit wird vorteilhaft eine große Flexibilität durch die Wahl unterschiedlicher Flansche möglich, indem Losflansche mit unterschiedlichen Flanschformen bereitgestellt werden, die dann bei der Montage jeweils mit dem in das Messleitungsende einzuschraubenden Flanschstutzen kombinierbar sind. Die Flanschstutzen können ggf. als Gleichteile in Verbindung mit unterschiedlichen Losflanschformen verwendet werden.

Durch die Schraubverbindung zwischen dem jeweiligen Messleitungsende und dem zugeordneten Flanschstutzen ist keine Tragkraft aufnehmende Schweißverbindung erforderlich, so daß die Anordnung auch bei Tragfunktion für den Drucktransmitter eine hohe mechanische Festigkeit aufweist. Falls erforderlich können (vorzugsweise nach der Montage) einfache Dichtschweißungen vorgenommen werden, die jedoch mechanisch nicht belastet sind.

Durch den über das Flanschteil des eingeschraubten Flanschstutzen übergeworfenen Losflansch ist durch dessen lagerichtige Verdrehung eine einfache Fluchtung der Lochbilder erreichbar. Toleranzprobleme bei der Montage treten nicht auf. Aus diesem Grund und in Verbindung mit der Schraubverbindung ist die Herstellung der Drucktransmitterinstallation und die Montage gegenüber der gattungsgemäßen Anordnung wesentlich vereinfacht, da insbesondere keine Schweißverbindungen an den Messleitungsenden (allenfalls einfache Dichtschweißungen) erforderlich sind.

In einer ersten vorteilhaften Ausführungsform nach Anspruch 2 ist der Flanschstutzen mit einem Außengewinde in ein entsprechendes Innengewinde am Messleitungsende eingeschraubt. Je nach den Gegebenheiten und alternativ dazu kann nach Anspruch 3 der Flanschstutzen mit einem zweiten Flanschteil auch fest an einer Anlagefläche am Messleitungsende verschraubt sein, insbesondere dann, wenn eine Messleitung gemäß Anspruch 4 als stabiler Messleitungsblock ausgebildet ist.

Für erforderliche Absperrungen wird mit Anspruch 5 vorgeschlagen, in an sich bekannter Weise in den Messleitungsblock ein Absperrventil und/oder vor den Drucktransmitter einen Ventilblock als Anschlussblock zu schalten.

Für eine günstige Zentrierung zwischen dem Losflansch und dem Flanschteil des Flanschstutzens soll die Anlagefläche nach Anspruch 6 kegelförmig ausgebildet sein.

Für eine gute Dichteigenschaft wird nach Anspruch 7 an der Dichtfläche des Flanschteils eine, einen O-Ring enthaltende Ringnut beansprucht, insbesondere bei geringerem Druck ist auch eine Flachdichtung verwendbar.

Nach Anspruch 8 wird an einem Messleitungsende die vorstehend beschriebene, zweiteilige Flanschausführung mit einem Losflansch verwendet. Am gegenüberliegenden Messleitungsende wird dagegen ein einteiliger, jedoch ebenfalls mit dem Messleitungsende verschraubter Flansch angebracht. Damit wird auch hier die mechanische Verbindung über stabile Verschraubungen erreicht, wobei je nach Bedarfsfall unterschiedliche Flanschausführungen verwendbar sind. Die Toleranzaufnahme kann hier an einem Messleitungsende über den dortigen, verdrehbaren Losflansch durchgeführt werden.

Mit Anspruch 9 wird herausgestellt, daß insbesondere Losflansche unterschiedlicher Gestalt, wie Ovalflansche, Doppelovalflansche oder Kreisscheibenflansche bereitgestellt und für Montagen verwendet werden können, ohne daß vormontierte, geschweißte Einheiten mit bestimmter Flanschgestalt zur Verfügung gestellt werden müssen.

Die erfindungsgemäße Drucktransmitterinstallation ist sowohl für einfache Druckmessungen mit nur einer Messleitung als auch für Differenzdruckmessungen nach Anspruch 10 mit parallelen Messleitungen einsetzbar.

Die erfindungsgemäße Ausbildung der Flanschverbindungen ist grundsätzlich auch für eine herkömmliche Drucktransmitterinstallation mit langen, biegbaren Messleitungen vorteilhaft einsetzbar. Die Summe der angegebenen Vorteile ergibt sich jedoch bei der direkten, freitragenden Anbringung des Drucktransmitters an der Prozessleitung nach Anspruch 11, wenn die Messleitung Trägerfunktion übernimmt.

Anhand einer Zeichnung wird die Erfindung näher erläutert.

Es zeigen:
- Fig. 1: eine schematische, perspektivische und auseinandergezogene Darstellung einer Drucktransmitterinstallation mit einer Messleitung,
- Fig. 2: eine schematische Schnittdarstellung einer Flanschverbindung zwischen dem Anschlussblock eines Drucktransmitters und der Messleitung,
- Fig. 3: eine schematische, perspektivische und auseinandergezogene Darstellung einer Drucktransmitterinstallation mit zwei Messleitungen zur Differenzdruckmessung,
- Fig. 4: eine schematische Schnittdarstellung einer weiteren Ausführungsform einer Flanschverbindung zwischen dem Anschlussblock eines Drucktransmitters und einer Messleitung, und
- Fig. 5: eine schematische Schnittdarstellung mit einer Flanschverbindung zwischen den Anschlüssen an der Prozessleitung und der Messleitung sowie einer Flanschverbindung zwischen dem Anschlussblock eines Drucktransmitters und der Messleitung.

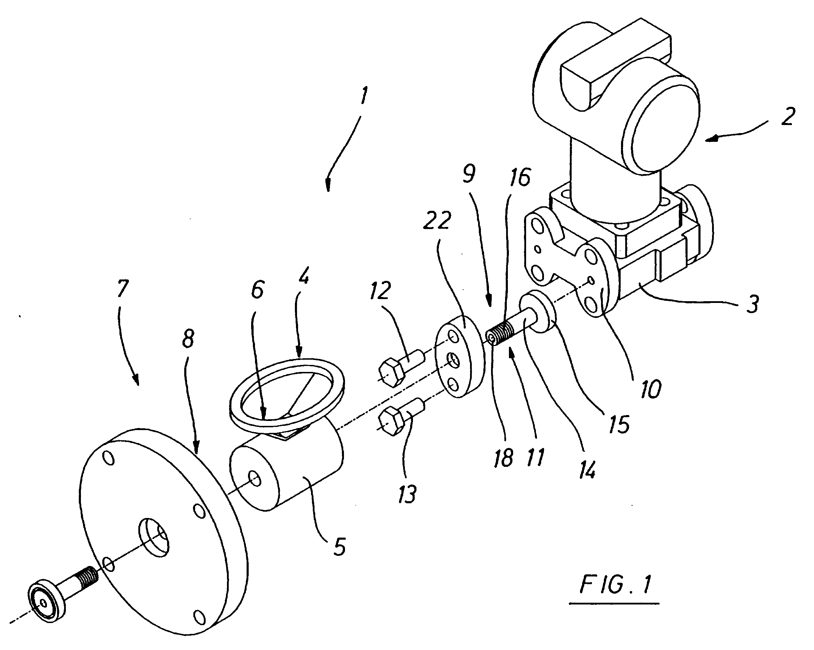

In der Fig. 1 ist beispielhaft eine Drucktransmitterinstallation 1 in auseinandergezogener Darstellung perspektivisch dargestellt. Diese Drucktransmitterinstallation 1 umfaßt einen Drucktransmitter 2 mit einem als Ventilblock ausgebildeten Anschlussblock 3 sowie einen Messleitungsblock 4 mit einer Messleitung 5 zwischen einer hier nicht dargestellten Prozessleitung und dem Anschlussblock 3 auf. Am Messleitungsblock 4 ist ferner ein Absperrventil 6 vorgesehen.

Zwischen den Anschlüssen an der hier nicht dargestellten Prozessleitung und der Messleitung 5 ist eine erste Flanschverbindung 7 vorgesehen, die eine hier ebenfalls nicht dargestellte prozessleitungsseitige Anlagefläche und einen entsprechend zugeordneten ersten messleitungsseitigen Flansch 8 aufweist, der mit der prozessleitungsseitigen Anlagefläche durch Schraubverbindungen verbindbar ist.

Ferner ist zwischen dem Anschlussblock 3 des Drucktransmitters 2 und der Messleitung 5 eine zweite Flanschverbindung 9 vorgesehen, die aus einer anschlussblockseitigen Anlagefläche 10 und einem entsprechend zugeordneten zweiten messleitungsseitigen Flansch 11 besteht. Dieser zweite messleitungsseitige Flansch 11 ist über Schraubverbindungen 12, 13 mit der anschlussblockseitigen Anlagefläche 10 verbindbar.

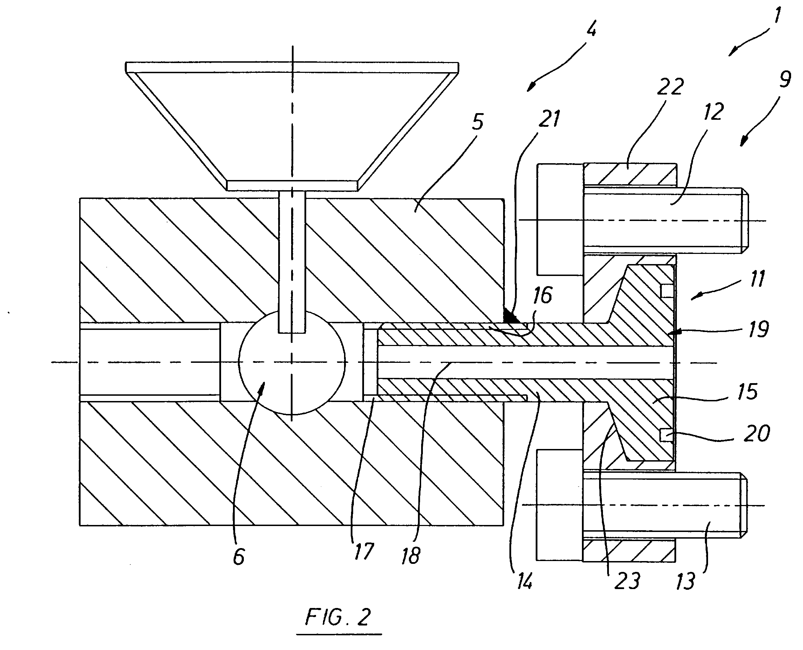

In der Fig. 2 ist die zweite Flanschverbindung 9 zwischen dem Anschlussblock 3 des Drucktransmitters 2 und der Messleitung 5 vergrößert im Querschnitt dargestellt. Wie dies dieser Darstellung zu entnehmen ist, ist der zweite messleitungsseitige Flansch 11 zweiteilig ausgeführt und besteht aus einem Flanschstutzen 14 mit einem Flanschteil 15 sowie einem hier beispielhaft als Ovalflansch ausgebildeten Losflansch 22.

Der Flanschstutzen 14 weist an seinem messleitungsseitigen Ende ein Außengewinde 16 auf, mit dem er in ein Innengewinde 17 am Messleitungsende fest einschraubbar ist. Ferner weist dieser Flanschstutzen 14 eine axiale Durchgangsbohrung 18 auf. Weiter weist das Flanschteil 15 an der stirnseitigen Dichtfläche 19 eine Ringnut 20 auf, in die ein O-Ring als Dichtring eingesetzt werden kann. Bei eingeschraubtem Flanschstutzen 14 kann dieser am Messleitungsende mit einer Dichtschweißnaht 21 versehen werden.

Dem Flanschteil 15 ist, wie dies aus der Fig. 2 weiter ersichtlich ist, dem Losflansch 22 übergeworfen, wobei die Anlagefläche 23 zwischen dem Losflansch 22 und dem Flanschteil 15 kegelförmig ausgeführt ist. Der Losflansch 22 übergreift das Flanschteil 15 derart, daß das Flanschteil 15 mit dessen stirnseitiger Dichtfläche 19 beim Festziehen der Schraubverbindungen 12, 13 gegen die anschlussblockseitige Anlagefläche 10 gepresst wird.

Die erste messleitungsseitige Flansch 8 ist, wie dies aus Fig. 1 ersichtlich ist, in ähnlicher Weise aufgebaut wie der zweite messleitungsseitige Flansch 9, wobei ein in das gegenüberliegende Messleitungsende einschraubbarer Flanschstutzen mitsamt Flanschteil vorgesehen ist und ein Ringflansch als Losflansch das Flanschteil übergreift.

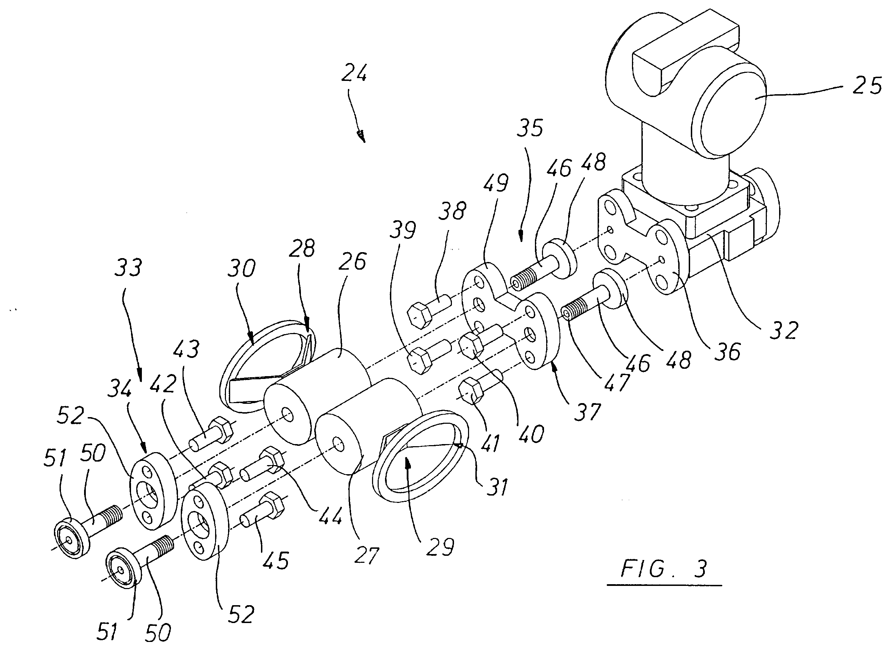

In der Fig. 3 ist eine weitere Ausführungsform einer Drucktransmitterinstallation 24 in perspektivischer und auseinandergezogener Darstellung dargestellt, bei der ein Drucktransmitter 25 als Differenzdrucktransmitter mit zwei parallelen Messleitungen 26, 27 an eine hier nicht dargestellte Messblendenanordnung der ebenfalls nicht dargestellten Prozessleitung angeschlossen ist.

Die Messleitungen 26, 27 sind auch hier wieder Bestandteil eines Messleitungsblocks 28, 29, die jeweils ein Absperrventil 30, 31 umfassen. Zwischen Anschlüssen an der hier nicht dargestellten Prozessleitung und den Messleitungen 26, 27 ist eine erste Flanschverbindung 33 vorgesehen, die eine ebenfalls nicht dargestellte, prozessleitungsseitige Anlagefläche sowie diesen entsprechend zugeordneten, ersten messleitungsseitigen Flanschen 34 besteht. Diese ersten messleitungsseitigen Flansche 34 sind über Schraubverbindungen 42, 43, 44, 45 mit der hier nicht dargestellten, prozessleitungsseitigen Anlagefläche verbindbar.

Zwischen einem als Ventilblock ausgebildeten Anschlussblock 32 des Differenzdrucktransmitters 25 und den Messleitungen 26, 27 ist eine zweite Flanschverbindung 35 vorgesehen, die aus einer anschlussblockseitigen Anlagefläche 36 und einem entsprechend zugeordneten, zweiten messleitungsseitigen Flansch 37 besteht. Dieser zweite messleitungsseitige Flansch 37 ist über Schraubverbindungen 38, 39, 40, 41 mit der anschlussblockseitigen Anlagefläche 36 verbindbar.

Entsprechend den Ausführungsformen nach Fig. 1 und 2 ist auch hier der zweite messleitungsseitige Flansch 37 zweiteilig ausgeführt und besteht aus einem mit dem jeweiligen Messleitungsende verschraubten Flanschstutzen 46 mit axialer Durchgangsbohrung 47 und Flanschteil 48 sowie aus einem Doppelovalflansch als Losflansch 49. Der Losflansch 49 ist so über die Flanschteile 48 übergeworfen, daß das Flanschteil 48 beim Festziehen der Schraubverbindungen 38, 39, 40, 41 fest mit der anschlussblockseitigen Anlagefläche verbunden und mit seiner Dichtfläche gegen diese Anlagefläche 36 gepresst wird.

In entsprechender Art und Weise sind auch die ersten messleitungsseitigen Flansche 34 zweiteilig aus Flanschstutzen 50 mit Flanschteil 51 und Ovalflansch als Losflansch 52 aufgebaut, wobei der Flanschstutzen 50 in ein Messleitungsende eingeschraubt ist und die Losflansche 52 über das Flanschteil 51 geworfen sind. Dadurch übergreifen auch hier die Losflansche 52 die Flanschteile 51 derart, daß die Flanschteile 51 beim Anziehen der Schraubverbindungen 42, 43, 44, 45 fest mit der prozessleitungsseitigen Anlagefläche verbunden werden können, wobei die Flanschteile 51 mit ihrer Dichtfläche gegen die prozessleitungsseitige Anlagefläche gepresst werden.

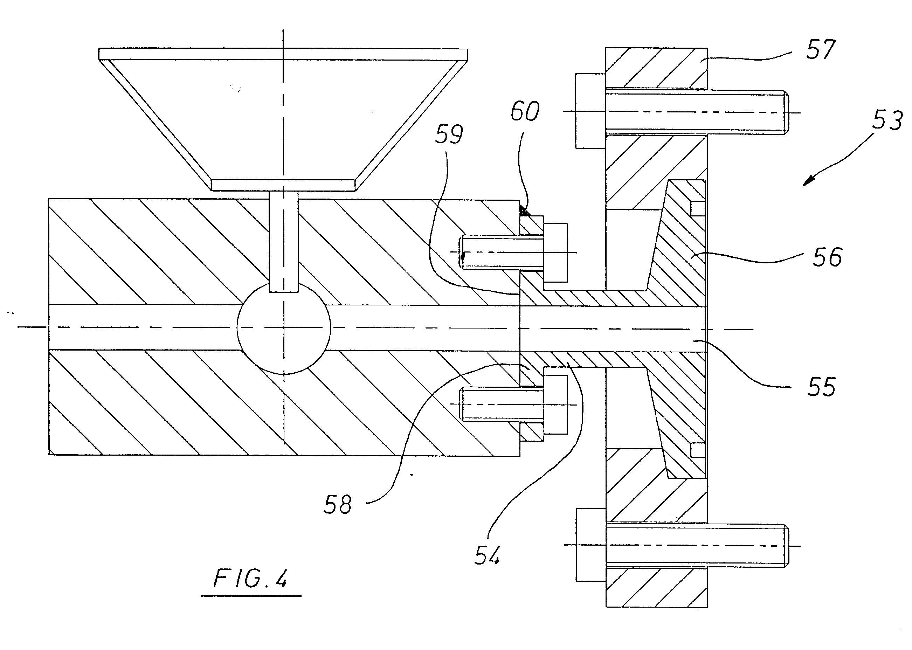

In der Fig. 4 ist eine alternative Ausführungsform eines messleitungsseitigen Flansches 53 dargestellt. Dieser messleitungsseitige Flansch 53 ist ebenfalls zweiteilig ausgeführt und besteht aus einem Flanschstutzen 54 mit einer axialen Durchgangsbohrung 55 und einem Flanschteil 56 mit stirnseitiger Dichtfläche sowie einem übergeworfenen, mit der jeweiligen Anlagefläche verschraubbaren Losflansch 57, der das Flanschteil 56 übergreift und der das Flanschteil 56 fest mit der hier nicht dargestellten Anlagefläche verbindet und mit seiner Dichtfläche gegen diese Anlagefläche presst.

Der Flanschstutzen 54 ist hier mit einem zweiten Flanschteil 58 fest an einer Anlagefläche 59 am Messleitungsende verschraubt. Um die Montage dieses messleitungsseitigen Flansches 53 zu ermöglichen, muß eine Ausnehmung in dem Losflansch 57 so dimensioniert sein, daß dieser über das zweite Flanschteil 58 geschoben werden kann. Gegebenenfalls kann auch hier eine Dichtschweißung 60 zwischen dem zweiten Flanschteil 58 und dem Messleitungsende vorgesehen sein.

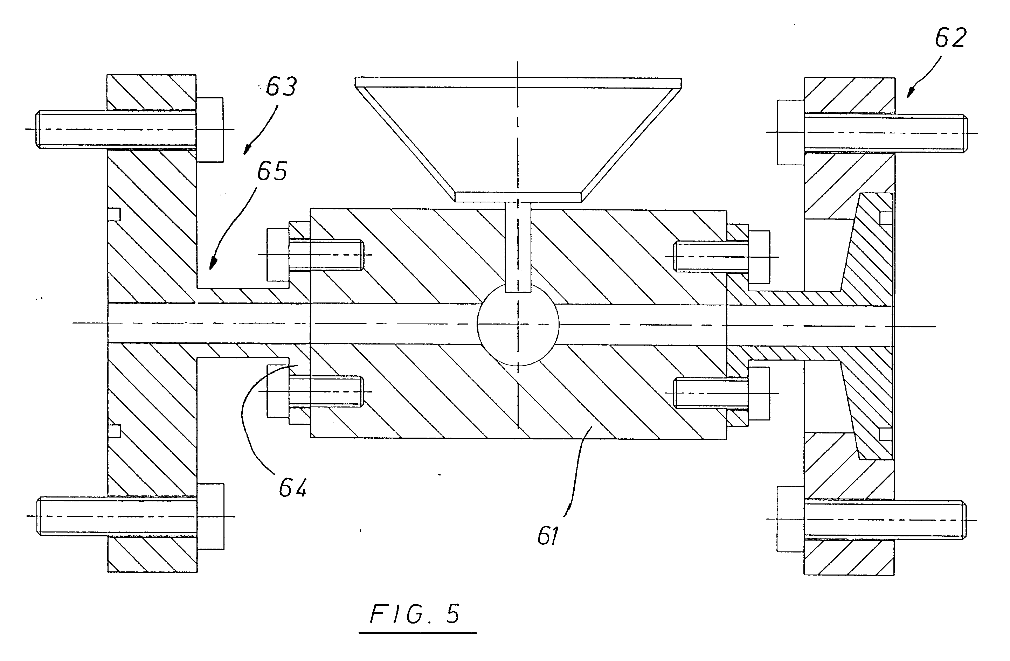

In der Fig. 5 ist beispielhaft eine Messleitung 61 dargestellt, bei der an einem rechten Messleitungsende eine der zweiteiligen Flanschverbindung der Fig. 4 entsprechender messleitungsseitiger Flansch 62 vorgesehen ist, während am gegenüberliegenden Messleltungsende eine Flanschverbindung 63 mit einem einteiligen, fest mit der Messleitung über ein Flanschteil 64 verschraubten, messleitungsseitigen Flansch 65 angebracht ist.

## Patentansprüche

1. Drucktransmitterinstallation an einer Prozessleitung einer Prozessanlage,
mit wenigstens einer mediumbeaufschlagten Messleitung zwischen der Prozessleitung und einem Anschlussblock des Drucktransmitters,
mit einer Flanschverbindung zwischen Anschlüssen an der Prozessleitung und der Messleitung bestehend aus einer Prozessleitungsseiten Anlagefläche und einem zugeordneten ersten messleitungsseitigen, damit durch Schraubverbindungen verbundenen Flansch, und/oder
mit einer Flanschverbindung zwischen dem Anschlussblock des Drucktransmitters und der Messleitung bestehend aus einer anschlussblockseitigen Anlagefläche und einem zugeordneten zweiten messleitungsseitigen, damit durch Schraubverbindungen verbundenen Flansch,
dadurch gekennzeichnet,
dass wenigstens einer der messleitungsseitigen Flansche (8, 11; 34, 37; 53; 62) zweiteilig ausgeführt ist, bestehend aus einem fest mit dem jeweiligen Messleitungsende verschraubten Flanschstutzen (14; 46, 50; 54) mit einer axialen Durchgangsbohrung (18; 47; 55) und mit einem Flanschteil (15; 48, 51; 56, 58; 64) mit stirnseitiger Dichtfläche (19), und
bestehend aus einem übergeworfenen, mit der jeweiligen Anlagefläche (10; 36; 59) verschraubten Losflansch (22; 49, 52; 57), der das Flanschteil (15; 48, 51; 56, 58; 64) übergreift und der das Flanschteil (15; 48, 51; 56, 58; 64) fest mit der Anlagefläche (10; 36; 59) verbindet und mit seiner Dichtfläche (19) gegen die Anlagefläche (10; 36; 59) presst.

2. Drucktransmitterinstallation nach Anspruch 1, dadurch gekennzeichnet, dass der Flanschstutzen (14; 46, 50) in ein Innengewinde (17) am Messleitungsende eingeschraubt ist.

3. Drucktransmitterinstallation nach Anspruch 1, dadurch gekennzeichnet, dass der Flanschstutzen (54) mit einem zweiten Flanschteil (58) fest an einer Anlagefläche (59) am Messleitungsende verschraubt ist.

4. Drucktransmitterinstallation nach einem der Ansprüche 1 bis 3, dadurch gekennzeichnet, dass die wenigstens eine Messleitung (5; 26, 27; 61) als Messleitungsblock (4; 28, 29) ausgebildet ist, mit je einer endseitigen Einschraubbohrung und/oder Anlagefläche.

5. Drucktransmitterinstallation nach Anspruch 4, dadurch gekennzeichnet, dass der Messleitungsblock (4; 28, 29) ein Absperrventil enthält und/oder vor den Drucktransmitter (2; 25) ein Ventilblock als Anschlussblock (3; 32) geschaltet ist.

6. Drucktransmitterinstallation nach einem der Ansprüche 1 bis 5, dadurch gekennzeichnet, dass die Anlagefläche (23) zwischen dem Losflansch (22; 49, 52; 57) und dem Flanschteil (15; 48, 51; 56; 64) kegelförmig ausgeführt ist.

7. Drucktransmitterinstallation nach einem der Ansprüche 1 bis 6, dadurch gekennzeichnet, dass die Dichtfläche (19) am Flanschteil (15; 48, 51; 56, 58; 64) einen in einer Ringnut (20) gehaltenen O-Ring umfaßt oder eine Flachdichtung verwendet ist.

8. Drucktransmitterinstallation nach einem der Ansprüche 1 bis 7, dadurch gekennzeichnet, dass an einem Messleitungsende eine Flanschverbindung mit einem zweiteiligen messleitungsseitigen Flansch (62) und am gegenüberliegenden Messleitungsende eine Flanschverbindung (63) mit einem einteiligen, fest mit der Messleitung (61) verbundenen, vorzugsweise mit einem Flanschteil (64) verschraubten, messleitungsseitigen Flansch (65) angebracht ist.

9. Drucktransmitterinstallation nach einem der Ansprüche 1 bis 8, dadurch gekennzeichnet, dass Losflansche (22; 49, 52; 57) unterschiedlicher Gestalt, insbesondere Ovalflansche (22; 52) oder Doppelovalflansche (49) oder Kreisscheibenflansche verwendet sind.

10. Drucktransmitterinstallation nach einem der Ansprüche 1 bis 9, dadurch gekennzeichnet, dass der Drucktransmitter (25) ein Differenzdrucktransmitter ist, der mit zwei parallelen Messleitungen (26, 27) an eine Messblendenanordnung der Prozessleitung angeschlossen ist.

11. Drucktransmitterinstallation nach einem der Ansprüche 1 bis 10, dadurch gekennzeichnet, dass die wenigstens eine Messleitung (5; 26, 27; 61) kurz und stabil ausgeführt ist und damit der Drucktransmitter (2; 25) gegebenenfalls mit Ventilblock (3; 32) freitragend von der mit der Prozessleitung verbundenen, wenigstens einen Messleitung (5; 26, 27; 61) gehalten ist.
